# DEMANDE DE BREVET EUROPEEN

(11) **EP 0 613 753 A1**
(43) Date de publication de la demande: **07.09.1994**
(21) Numéro de dépôt: 94400430.8
(22) Date de dépôt: 01.03.1994
(51) Int. Cl.: B23K 26/10, F16H 35/00

(54) **Articulation de deux tubes concourants et d'un miroir orienté suivant leur bissectrice**

(30) Priorité: 03.03.1993 FR 9302448
(71) Demandeur: COMMISSARIAT A L'ENERGIE ATOMIQUE, F-75015 Paris Cédex 15 (FR)
(72) Inventeur: Stockmann, Bernard, F-91700 Sainte Genevieve des Bois (FR)
(74) Mandataire: Ilgart, Jean-Christophe

(57) **Abrégé**

Articulation de deux tubes (1 et 2) et d'un miroir (3) à orienter suivant la bissectrice de l'angle qu'ils forment. La transmission originale est composée de deux pignons coniques (5, 6) solidaires des tubes et engrenant avec une roue dentée (8) montée tournante sur l'élément (3).

Cette articulation peut trouver usage sur des systèmes de guidage de faisceaux lumineux, où les bras (1 et 2) sont des tubes et l'élément (3) un miroir.

## Description

L'invention concerne une articulation de deux tubes concourants et d'un miroir orienté suivant leur bissectrice.

Des ensembles de ce genre sont généralement destinés à réfléchir un faisceau lumineux de l'axe d'un tube à celui de l'autre et sont utilisés en particulier pour guider les faisceaux de laser. D'autres applications sont concevables pour d'autres faisceaux lumineux, notamment en photographie ou en astronomie, même si elles n'ont pas bénéficié d'autant d'intérêt.

De nombreuses solutions sont connues pour réaliser cet effet de réflexion entre deux bras concourants dont l'angle est variable, mais elles ne donnent pas entière satisfaction. C'est ainsi qu'on a proposé de disposer (par exemple dans le document WO-A-90104487) un miroir solidaire de chaque bras et dont l'orientation permet de réfléchir le faisceau entre l'axe du tube respectif et un axe de renvoi commun. L'axe de renvoi est matérialisé par des coudes en prolongement des bras et doit avoir une longueur non négligeable qui rend l'articulation encombrante ; de plus, la paire de miroirs absorbe une plus grande quantité de l'énergie du faisceau lumineux, ce qui est d'autant plus regrettable que les bras complexes de guidage ont généralement d'autres articulations qui rendent finalement la perte de rendement importante et que cette énergie perdue pour les tâches utiles échauffe les articulations, ce qui nécessite des systèmes de refroidissement conséquents.

C'est pourquoi la solution consistant à disposer un miroir unique et orienté suivant la bissectrice de l'angle formé par les bras au moyen d'une transmission mécanique qui l'unit aux bras a davantage acquis la faveur des spécialistes. La transmission peut consister en un levier, auquel le miroir est fixé, articulé à une extrémité à un des bras et repoussé à l'extrémité opposée par l'autre bras. Comme les bras sont articulés entre eux devant le milieu du levier, celui-ci subit des rotations de demi-angle d'ouverture ou de fermeture des bras (document US-A-4 825 036). L'inconvénient essentiel est que l'amplitude angulaire de ces articulations est limitée en pratique, car la relation géométrique de demi-rotation du miroir n'est réalisée qu'approximativement, et toujours plus mal quand le levier est éloigné de l'articulation des bras entre eux. Un autre système, proposé dans le brevet français 1 557 974, consiste à relier le miroir à un levier qui est articulé à deux bielles de longueur égale qui coulissent sur lui et sur les bras. On obtient un mécanisme semblable à celui d'un compas, mais qui est vraiment encombrant, peu maniable et peu précis à cause des nombreux ajustements qu'il exige. Enfin, on a utilisé un train de deux engrenages pour orienter le miroir, notamment dans le document US-A-4 597 642 ; cette solution est plus satisfaisante que les précédentes, mais l'invention constitue encore une amélioration par la compacité et la simplicité de la transmission qui la caractérise, et elle permet de remédier plus facilement à un défaut inhérent aux engrenages, à savoir les jeux de denture qui peuvent conduire à un défaut d'orientation du miroir.

En effet, le train d'engrenage conforme à l'invention est caractérisé en ce qu'il n'est composé que de trois pièces dentées au lieu de quatre : deux pignons solidaires respectivement des bras et ayant un axe de denture confondu avec l'axe d'articulation et une roue engrenant avec les deux pignons et tournant autour d'un pivot solidaire de l'élément.

Les dentures sont coniques, et les pignons sont identiques, au moins quant à l'angle de conicité et à la forme et aux dimensions des dents. Mais le diamètre de la roue est indifférent : on le choisit en pratique en fonction des contraintes de dimensionnement des bras, des pignons et des autres pièces, ce qui offre une plus grande facilité de construction.

Un système de rattrapage des jeux de denture peut consister en un ressort qui repousse la roue vers les pignons en la faisant glisser sur son pivot.

On va maintenant passer à la description des figures qui représentent une réalisation non exhaustive de l'invention :

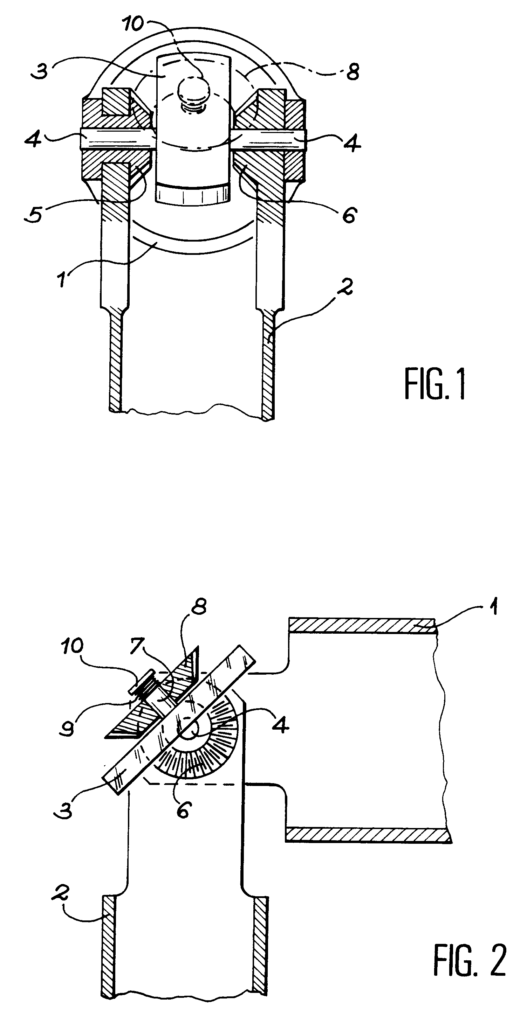

- la figure 1 est une vue de face de l'articulation ;
- et la figure 2 est une vue de côté de l'articulation.

Les bras portent les références 1 et 2, et le miroir la référence 3. Le miroir 3 est relié rigidement à une broche 4 qui matérialise l'axe d'articulation et autour de laquelle les bras 1 et 2 tournent. Chacun des bras 1 et 2 est tubulaire sur presque toute sa longueur et porte un pignon conique 5 ou 6 qui lui est fixé et dont l'axe de denture est confondu avec celui de la broche 4, et le miroir 3 porte un pivot 7 autour duquel une roue dentée 8 à denture conique tourne. L'axe du pivot 7 et de la roue dentée 8 est sécant et perpendiculaire à l'axe d'articulation, et la roue dentée 8 constitue un train d'engrenages avec les pignons coniques 5 et 6, avec lesquels elle engrène. Un ressort 9 est agencé autour du pivot 7 et comprimé entre la roue dentée 8 et une collerette 10 au bout du pivot 7, afin de repousser la roue dentée 8 vers les pignons coniques 5 et 6 et vers l'axe d'articulation, ce qui élimine les jeux de denture.

On comprend facilement que si un des bras est mis en rotation par rapport à l'autre, il imposera à la roue dentée 8 une rotation sur elle-même qu'accompagnera une rotation du pivot 7 et du miroir 3 autour de la broche 4, dont la valeur correspondra à la moitié de l'angle de rotation des bras 1 et 2 entre eux. Le miroir 3 restera donc face à la bissectrice de l'angle formé par les bras 1 et 2.

L'invention peut être mise en oeuvre sur des articulations telles que celle qui est décrite dans le brevet français 2 646 719 avec plus de détails technologiques et qui est d'ailleurs plus complexe puisqu'elle consiste en une articulation universelle en joint de cardan : les pignons et roues coniques remplaceraient les engrenages à dentures droites de ce brevet-là sans difficulté pour l'homme du métier.

## Revendications

1. Articulation de deux tubes (1, 2) concourants et appartenant à un mécanisme de guidage d'un faisceau lumineux et d'un miroir (3) uni aux tubes (1, 2) par un train d'engrenages qui l'oriente suivant la bissectrice des tubes, caractérisée en ce que le train d'engrenages est composé de deux pignons (5, 6) à denture conique, solidaires respectivement des tubes (1, 2) et ayant un axe de denture confondu avec l'axe d'articulation, et d'une roue à denture conique (8) engrenant avec les deux pignons (5, 6) et tournant autour d'un pivot (7) solidaire du miroir (3).

2. Articulation suivant la revendication 1, caractérisée par un ressort (9) repoussant la roue (8) vers les pignons (5, 6) en la faisant glisser sur le pivot (7).
